# NOUVEAU FASCICULE DE BREVET EUROPEEN

(11) **EP 0 623 462 B2**
(45) Date de publication et mention de la décision concernant l'opposition: **11.09.2002**
(45) Mention de la délivrance du brevet: 20.05.1998
(21) Numéro de dépôt: 94420128.4
(22) Date de dépôt: 25.04.1994
(51) Int. Cl.: B32B 15/01

(54) **Alliage de revêtement à base d'aluminium et produit composite avec noyau un alliages 2000 ou 6000**
Plattierungslegierung auf Aluminiumbasis und Verbundwerkstoff mit Kern aus 2000 oder 6000 Legierungen
Aluminium base cladding alloy and composite product with core of 2000 or 6000 alloys

(30) Priorité: 28.04.1993 FR 9305259
(43) Date de publication de la demande: 09.11.1994
(73) Titulaire: PECHINEY RHENALU, 92400 Courbevoie (FR)
(72) Inventeur: Sainfort, Pierre, F-38000 Grenoble (FR); Reboul, Max, F-38120 Saint Egreve (FR)
(74) Mandataire: Mougeot, Jean-Claude

(56) Documents cités:
- EP-A- 0 473 122
- FR-A- 726 336
- FR-A- 1 343 204
- FR-A- 1 519 920
- GB-A- 485 292
- US-A- 3 133 796
- US-A- 4 090 873
- J.HATCH ''Aluminum:Properties and Physical Metallurgy'' 1987 , AMERICAN SOCIETY FOR METALS , METALS PARK, OHIO *Pages 372 et 373, "Alclad Products" et Table 10,"Commercial Alclad Sheet and Plate"
- Catalogue CEGEDUR PECHINEY, April 1985, p. 26
- J. HATCH "Aluminium Properties and Physical Metallurgy", 1993, American Society for Metals, Ohio, pages 50, 134-139, 233,234 et 372-374
- Federal Specification Sheet "Aluminium alloy alclad 2014, plate and sheet, QQ-A-250/3F, 21-09-1978

## Description

L'invention concerne une tôle composite plaquée comportant une âme en alliage d'aluminium de la série 2000 ou de la série 6000 contenant du Cu. On utilisera dans la suite de la description les désignations de l'Aluminum Association.

Les tôles composites classiques utilisées en aéronautique, en particulier celles qui constituent les fuselages, sont généralement composées d'une âme en 2024 et d'un revêtement superficiel en 1050 ou 1070, plaqué sur une ou deux faces.

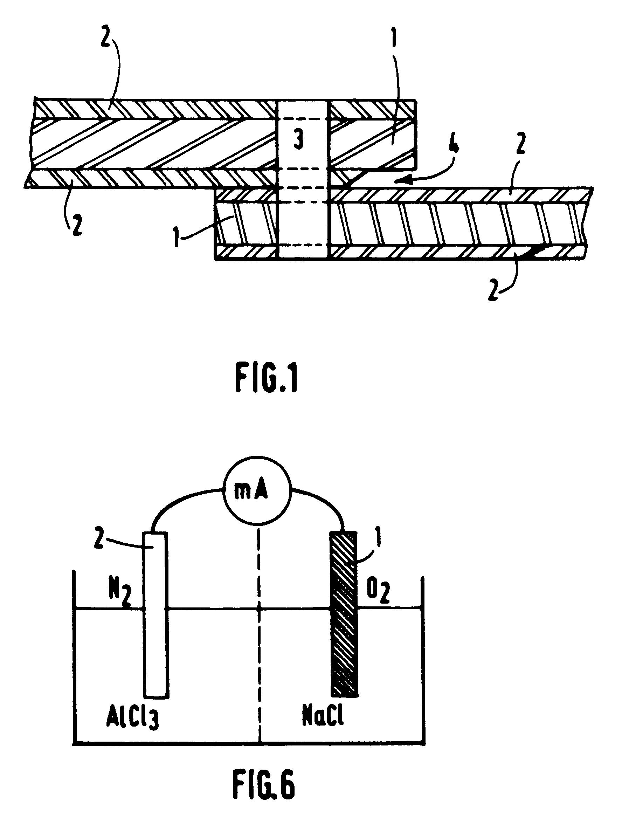

Cependant au niveau des assemblages rivetés, très nombreux sur les avions, cette structure constitue un point faible, car elle favorise la pénétration de la corrosion dans l'assemblage comme cela est schématisé sur la figure 1.

Si le revêtement 1050 ou 1070 assure une bonne protection cathodique de l'âme en 2024 contre la corrosion par piqûres, par contre le risque d'apparition de corrosion au droit des assemblages des tôles en 2024 revêtues de 1050 ou 1070 est assez élevé.

Pour résoudre ce problème, la demanderesse a donc cherché d'autres alliages de revêtement, assurant aussi une protection cathodique suffisante de l'âme en alliage 2000, et qui, d'une part, confèrent une moins grande sensibilité à la corrosion au niveau des assemblages, et qui, d'autre part, contribuent de manière positive à la résistance mécanique de l'ensemble plaqué.

Le brevet US-A-4090873 se rapporte à un produit composite plaqué avec une âme en aluminium AA2024 et un revêtement en alliage AA6053.

Le catalogue CEGEDUR PECHINEY, Techniques Avancées publié en avril 1985, décrit le revêtement d'une âme en alliage AA2014 avec un alliage AA6003, ledit revêtement ayant 2-8% de l'épaisseur totale.

Le document EP-A-0 473 122 divulgue l'utilisation des alliages 1xxx ou 7072 comme revêtement d'une âme correspondant à l'alliage AA2024 à l'état T3.

Le document "Aluminum alloy Alclad 2014, plate and sheet", Federal Specification Sheet QQ-A-250/3F daté 21.09.1978, décrit le revêtement en alliage AA6003 sur l'âme AA2014.

Le document "Aluminum, Properties and Physical Metallurgy", Textbook edited by John E. Hatch, American Society for Metals, fifth printing, Janvier 1993, page 373, Tableau 10, 1er exemple divulgue le revêtement en alliage AA6003 sur l'âme AA2014.

Le brevet FR 1343204 (The British Aluminum Company) décrit une tôle composite plaquée pour fuselage, notamment d'avions supersoniques, présentant une bonne résistance à la température. L'âme est en alliage à traitement thermique, par exemple un alliage de la série 2000, et le revêtement un alliage d'aluminium contenant (en poids) de 0.3 à 1,3% de silicium, de 0,4 à 1,5% de magnésium, et facultativement de 0,4 à 1% de manganèse et de 0,2 à 1,5% de zinc.

Le brevet GB 485292 (Dûrener Metallwerke) décrit une tôle composite plaquée résistant à la corrosion. L'âme est en alliage d'aluminium contenant de 2 à 5% de cuivre, de 0,2 à 1,5% de silicium, de 0,2 à 1,5% de manganèse et de 0,3 à 2% de magnésium. Le revêtement est en alliage d'aluminium contenant du silicium, du manganèse et du magnésium dans les mêmes limites que l'alliage d'âme, mais sans cuivre.

On connaît par ailleurs l'alliage 6101 enregistré à l'Aluminum Association avec la composition en poids :
Si 0,3 - 0,7 %
Fe < 0,5 %
Cu < 0,10 %
Mn < 0,03 %
Mg 0,35 - 0,8 %
et utilisé notamment pour la fabrication de fil électrique.

La tôle composite plaquée selon l'invention est constituée d'une âme en alliage d'aluminium de la série 2000 à l'état T3 ou T 351, ou en alliage 6000 au cuivre à l'état T6 ou T 651 et d'un revêtement 1 ou 2 faces en alliage d'aluminium représentant en tout 1 à 10% de l'épaisseur totale de la tôle, l'alliage de revêtement contenant (en poids %) :
Si de 0,20 à 0,45
Mg de 0,45 à 0,65
Fe < 0,15
Mn < 0,10
Cu < 0,05
autres: moins de 0,05% chacun, moins de 0,15% au total
   reste Al

L'alliage de revêtement est obtenu par coulée semi-continue classique sous forme de plaques et est évidemment compatible avec la gamme de transformation thermomécanique de l'alliage d'âme, qui appartient généralement à la série 2000 (et de préférence le 2024) ou à la série 6000 contenant du Cu. En particulier, cette gamme doit permettre la mise en solution complète de l'alliage de revêtement, tout en évitant sa brûlure, en vue d'obtenir le maximum de durcissement.

La liaison alliage de revêtement/âme est généralement obtenue par co-laminage à chaud dans les conditions habituelles de transformation de l'alliage d'âme connue de l'homme du métier.

Le composite ainsi obtenu possède une résistance globale mesurée par la limite élastique à 0,2% d'allongement résiduel (Rp 0,2) qui est augmentée de 1 à 6% et une rigidité (module d'Young) qui est augmentée de 1 à 5% par rapport à un composite 2024/1070, de même géométrie.
Sur la figure 1, relative à l'art antérieur, le repère 1 représente l'alliage d'âme en 2024 T351, le repère 2 le revêtement en 1070 ; un rivet est schématisé en 3, et en 4 se manifeste la corrosion dans l'assemblage.

L'invention sera mieux comprise à l'aide de l'exemple suivant, illustré par les figures suivantes :
Figure 1 : schéma de corrosion galvanique dans un ensemble riveté.
Figure 2 : faciès de corrosion sur 2024/alliage selon l'invention (x200), suivant l'essai de corrosion intergranulaire selon la norme AIR 9048.
Figure 3 : faciès de corrosion sur 2024/alliage selon l'invention (x200), suivant l'essai Interano.
Figure 4 : faciès de corrosion sur 2024/alliage selon l'invention (x200), suivant l'essai ASSET.
Figure 5 : faciès de corrosion sur 2024/1070, suivant l'essai ASSET.
Figure 6 : dispositif de simulation de la corrosion galvanique intersticielle.
Figure 7 : résultats des essais de corrosion galvanique sur 2024/1070 et 2024/alliage selon l'invention.

Deux tôles en 2024 ont été plaquées sur les deux faces, d'une part avec le 1070 selon l'art antérieur (80 µm par face) et d'autre part avec l'alliage 6000 de la composition ci-dessus (40 µm par face), ces tôles plaquées ont une épaisseur totale de 1,6 mm.

Les alliages constituants et le produit composite ont été essayés dans les conditions suivantes :
. essais de corrosion intergranulaire selon la norme AIR 9048 et selon la procédure interne Interano pour le produit plaqué avec l'alliage selon l'invention.
   Le test Interano consiste essentiellement en une attaque électrolytique de l'échantillon pendant 6h sous 1mA/cm² dans une solution électrolytique à la température ambiante contenant 2M NaClO₄ 0,1/3M AlCl₃ et 0,01 M CrO₄(NH₄)2.

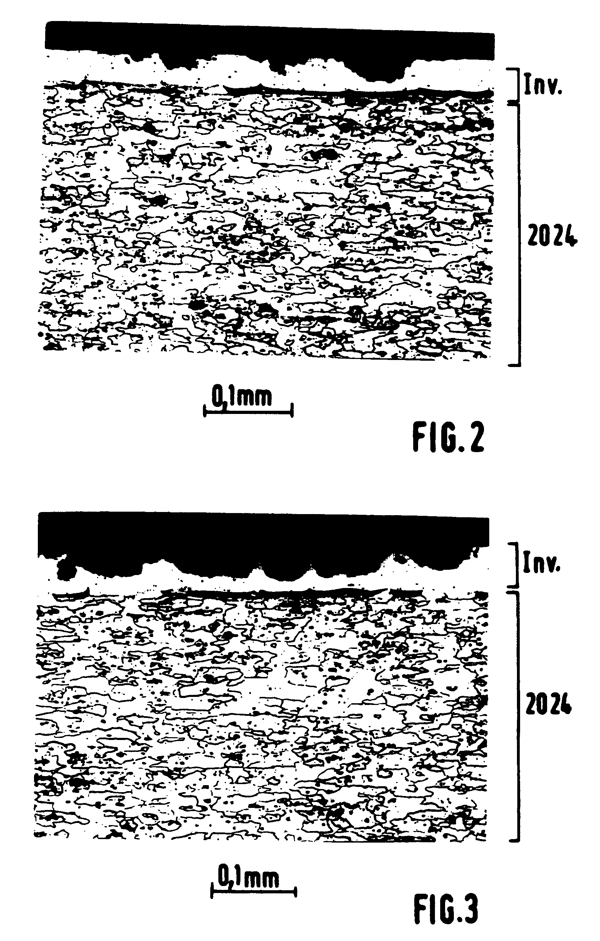

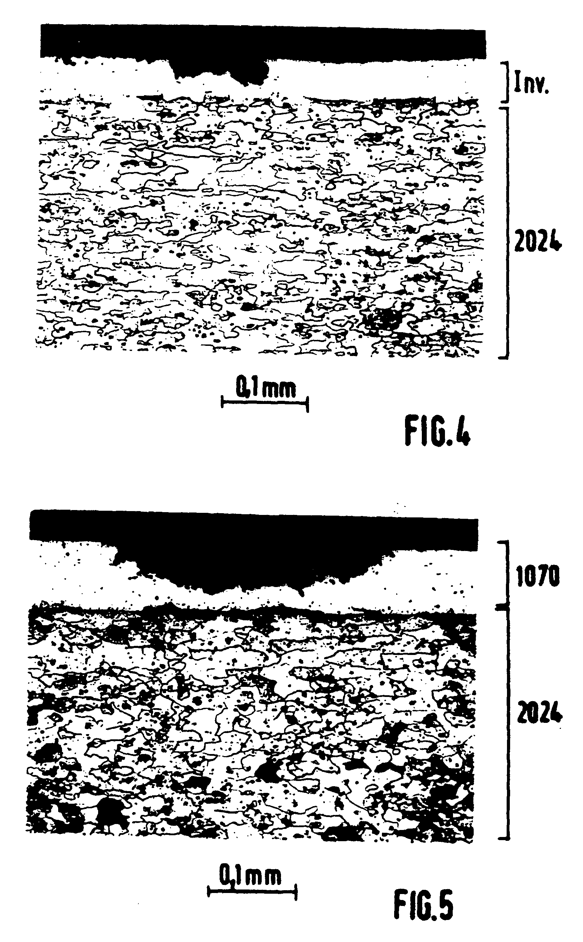

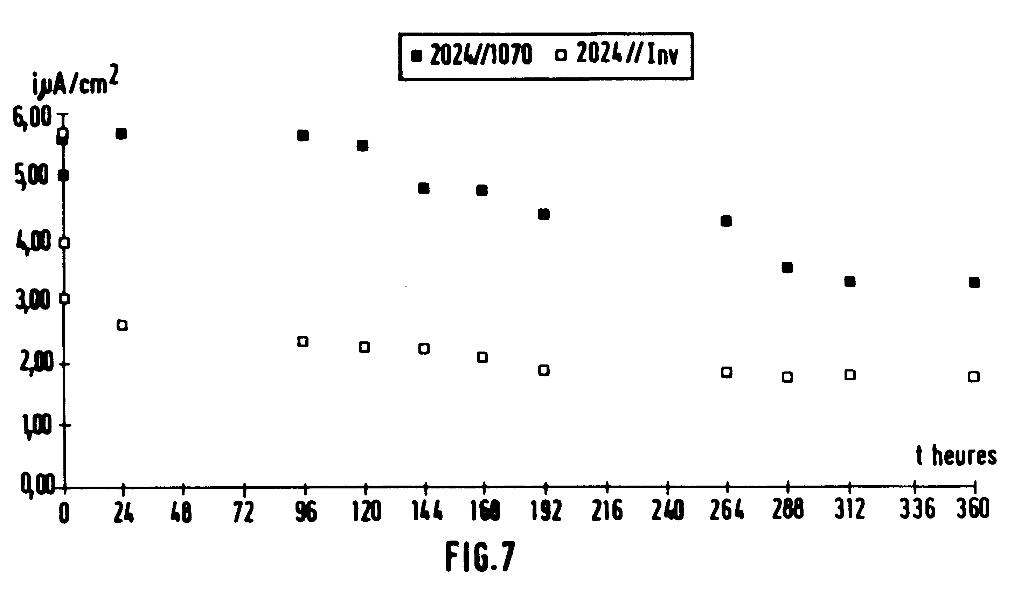

Les faciès de corrosion obtenus sont représentés aux figures 2 et 3.
. Essais de corrosion par piqûre.
   Les échantillons ont été immergés pendant 6h à 65°C dans une solution ASSET (norme ASTM 66). Les faciès de corrosion ainsi obtenus sont reportés sur les figures 4 et 5.
   On note l'absence de corrosion intergranulaire dans les 2 cas, mais une profondeur maximale de piquration supérieure pour le 1070 par rapport à l'alliage selon l'invention.
. Essais de corrosion dans un assemblage rivé, dont la corrosion galvanique est simulée par l'essai suivant, schématisé à la figure 6.
   On place l'alliage d'âme dans une solution non désaérée contenant 0,06M de NaCI et l'alliage de placage dans une solution à 0,02M de AlCl₃, désaérée par barbotage d'azote.
   Le courant galvanique donne une indication de la résistance à la corrosion, d'autant plus importante que le courant est plus faible. Ce courant reste inférieur à 4 µA/cm², ou même 3 µA/cm² au bout de 200h.

Les résultats obtenus jusqu'à 15 jours d'essais avec les couples 2024/1070 et 2024/alliage selon l'invention sont portés sur la figure 7.

Les caractéristiques mécaniques (sens travers long) obtenus à l'état T3 sont les suivantes :

| | |
|---|---|
| 2024/1070 | Rp 0,2 = 310 MPa |
| 2024/invention | Rp 0,2 = 325 MPa |

On a également constaté que le module d'Young du composite plaqué selon l'invention est légèrement supérieur à celui du composite plaqué selon l'art antérieur.

## Revendications

1. Tôle composite plaquée constituée d'une âme en alliage d'aluminium de la série 2000 à l'état T3 ou T351, ou en alliage 6000 au cuivre à l'état T6 ou T651, et d'un revêtement 1 ou 2 faces en alliage d'aluminium représentant 1 à 10% de l'épaisseur totale, l'alliage de revêtement contenant (en poids %):
de 0,20 à 0,45 Si
de 0,45 à 0,65 Mg
moins de 0,15 Fe
moins de 0,10 Mn
moins de 0,05 Cu
autres éléments : moins de 0,05 chacun et moins de 0,15 au total, reste Al.

2. Tôle composite selon la revendication 1, **caractérisée en ce que** l'alliage d'âme est le 2024.

3. Tôle composite selon l'une des revendications 1 ou 2, **caractérisée en ce que** la liaison revêtement/âme est obtenue par co-laminage à chaud.

4. Tôle composite selon l'une des revendications 1 à 3, **caractérisée en ce que** le courant de corrosion galvanique est inférieur à 4 µA/cm² pour une exposition allant jusqu'à 200 h, pendant des essais de corrosion dans un assemblage rivé, en plaçant l'alliage d'âme dans une solution non désaérée contenant 0,06 M de NaCl et l'alliage de placage dans une solution et 0,02 M de AlCl₃, désaérée par barbotage d'azote.

5. Tôle composite selon la revendication 4, **caractérisée en ce que** le courant galvanique est inférieur à 3 µA/cm² pour une exposition allant jusqu'à 200 h.

6. Utilisation de la tôle composite selon l'une des revendications 1 à 5 pour les fuselages d'avion.

## Patentansprüche

1. Plattiertes Verbundblech bestehend aus einem Kern aus Aluminiumlegierung der Serie 2000 im Zustand T3 oder T351 oder 6000 mit Kupfer im Zustand T6 oder T651 und einer ein- oder beidseitigen Beschichtung aus Aluminiumlegierung, die 1 bis 10 % der Gesamtdicke darstellt, wobei die Beschichtungslegierung enthält (in Masse-%):
Si 0,20 bis 0,45
Mg 0,45 bis 0,65
Fe weniger als 0,15
Mn weniger als 0,10
Cu weniger als 0,05
weitere Elemente: jeweils weniger als 0,05 und insgesamt weniger als 0,15, Rest Al.

2. Verbundblech nach Anspruch 1, **dadurch gekennzeichnet, dass** die Kernlegierung die Legierung 2024 ist.

3. Verbundblech nach einem der Ansprüche 1 oder 2, **dadurch gekennzeichnet, dass** die Verbindung von Beschichtung und Kern durch Warmwalzen hergestellt wird.

4. Verbundblech nach einem der Ansprüche 1 bis 3, **dadurch gekennzeichnet, dass** der galvanische Korrosionsstrom kleiner als 4 µA/cm² ist bei einer Wirkzeit von bis zu 200 h während Korrosionsversuchen in einer Nietverbindung, bei denen die Kernlegierung in eine nicht entlüftete Lösung mit 0,06 M NaCl und die Plattierungslegierung in eine durch Stickstoffspülung entlüftete Lösung mit 0,02 M AlCl₃ eingebracht wird.

5. Verbundblech nach Anspruch 4, **dadurch gekennzeichnet, dass** der galvanische Strom bei einer Wirkzeit von bis zu 200 h kleiner als 3 µA/cm² ist.

6. Verwendung des Verbundbleches nach einem der Ansprüche 1 bis 5 für Flugzeugrümpfe.

## Claims

1. Clad metal sheet formed from a core of aluminium alloy from series 2000 in the T3 or T351 temper or a 6000 alloy with copper in the T6 or T651 temper and a cladding on 1 or 2 faces of aluminium alloy representing 1 to 10% of the total thickness, the cladding alloy containing (in weight %):
from 0.20 to 0.45 Si
from 0.45 to 0.65 Mg
less than 0.15 Fe
less than 0.15 Mn
less than 0.05 Cu
other elements: less than 0.05 each and less than 0.15 in total, remainder Al.

2. Clad metal sheet according to Claim 1 **characterised in that** the core alloy is 2024.

3. Clad metal sheet according to one of Claims 1 or 2 **characterised in that** the cladding/core bond is obtained by hot rolling.

4. Clad metal sheet according to one of Claims 1 to 3 **characterised in that** the galvanic corrosion current is less than 4 µA/cm² for an exposure up to 200 h, during corrosion trials in a riveted assembly, by placing the core alloy in a non-deaerated solution containing 0.06 M of NaCl and the cladding alloy in a solution with 0.02 M AlCl₃, deaerated by bubbling nitrogen.

5. Clad metal sheet according to Claim 4 **characterised in that** the galvanic current is less than 3 µA/cm² for an exposure up to 200 h.

6. Use of the clad metal sheet according to one of the Claims 1 to 5 for airplane fuselages.
